# EUROPÄISCHE PATENTSCHRIFT

(11) **EP 2 441 998 B1**
(45) Veröffentlichungstag und Bekanntmachung des Hinweises auf die Patenterteilung: **10.10.2012**
(21) Anmeldenummer: 10013677.9
(22) Anmeldetag: 15.10.2010
(51) Int. Cl.: F16L 23/14, F16L 51/02, F24F 13/02

(54) **Flexibles Teilstück für einen Gasströmungskanal**
Flexible section for a gas flow channel
Elément flexible pour un canal d'écoulement de gaz

(43) Veröffentlichungstag der Anmeldung: 18.04.2012
(73) Patentinhaber: Robert Geiger, technische Bauteile GmbH, 89335 Ichenhausen (DE)
(72) Erfinder: Geiger, Robert, 89359 Kötz (DE)
(74) Vertreter: Munk, Ludwig

(56) Entgegenhaltungen:
- EP-A1- 0 546 246
- EP-A1- 1 357 323
- EP-B1- 1 163 467
- DE-A1-102009 021 859
- DE-U1- 9 201 808
- DATABASE WPI Week 201043 Thomson Scientific, London, GB; AN 2010-G96378 XP002627849, -& CN 101 718 381 A (FUSHIBAO ELECTRICAL APPLIANCE SCI TECH C) 2. Juni 2010 (2010-06-02)

## Beschreibung

Die Erfindung betrifft ein flexibles Teilstück für einen Gasströmungskanal mit einem zumindest teilweise aus flexiblem Material bestehenden schlauchförmigen Balg, der mit seinen voneinander abgewandten Endbereichen jeweils einen zugeordneten umlaufenden Halterahmen durchgreift und hieran festgelegt ist, wobei die Halterahmen im Bereich ihres radial inneren Umfangs jeweils eine als einseitig frei endende Randleiste ausgebildete Begrenzungswand aufweisen,d ie zusammen mit einem gegenüberliegenden Steg einen zu der vom jeweils anderen Halterahmen abgewandten Seite hin offenen Schlitz begrenzt, in dem der Balg mit einer zugeordneten Profilleiste festgelegt ist.

Eine Anordnung dieser Art ist aus der EP 1 163 467 B1 bekannt. Bei dieser bekannten Anordnung ist der aus flexiblem bzw. elastischem Material bestehende Balg doppelwandig ausgebildet. Dieser Balg besitzt rechtwinklig abgewinkelte Endabschnitte, die jeweils eine einstückig hiermit ausgebildete Verankerungslippe besitzen, die mit einer Hakenlippe versehen ist. Der Balg wird mit seinen Enden an Flanschprofilen befestigt, die kanalinnenseitig eine u-förmige Nut aufweisen, in welche die jeweils zugeordnete, balgseitige Verankerungslippe mit ihrer Hakenlippe einführbar ist, wobei eine nutseitig vorgesehene Halteleiste hintergriffen wird. Infolge der Abwinklung der Endabschnitte des Balgs ergeben sich in den Eckbereichen Falten, die eine Reinigung erschweren und in denen sich daher Schmutzrückstände eine längere Zeit halten können, was aus hygienischen Gründen unerwünscht ist. Zudem erweist sich die Verbindung des Balgs mit den Rahmenprofilen als nicht sicher genug, da die Verankerungslippe lediglich einseitig mit einer Hakenlippe versehen ist und daher infolge ungünstiger Bewegungen aus ihrer Verankerung gelöst werden kann. Außerdem ist die Herstellung der bekannten Anordnung schwierig, insbesondere wenn die einstückig mit dem Balg verbundenen Verankerungslippen aus einem steiferem Material als der Balg selbst bestehen sollen.

Hiervon ausgehend ist es die Aufgabe der vorliegenden Erfindung, ein flexibles Teilstück eines Gasströmungskanals oben genannter Art so zu verbessern, dass nicht nur eine einfache Reinigung des vom Balg gebildeten Strömungskanalabschnitts gewährleistet ist, sondern auch eine kostengünstige, einfache und besonders sichere Verbindung des Balgs mit den Halterahmen sichergestellt ist.

Diese Aufgabe wird erfindungsgemäß dadurch gelöst, dass die Profilleiste als den zugeordneten Endbereich des Balgs bildende, an ihm angebrachte, im Querschnitt u-förmige Leiste ausgebildet ist, die an der frei endenden Randleiste eingehängt ist, wobei ihr von der Kanalinnenseite abgewandter Schenkel in den Schlitz eingeführt ist, der beidseitig nach innen stufenförmige Erweiterungen aufweist, die zwei Raststufen bilden, und dass der dem Schlitz zugeordnete Schenkel der am Balg angebrachten Profilleiste zwei voneinander abgewandte Rastleisten aufweist, denen jeweils eine Raststufe zugeordnet ist.

Mit diesen Maßnahmen wird die oben genannte Aufgabe auf höchst einfache und kostengünstige Weise gelöst. Die Randkante der Randleiste bildet praktisch einen Haken, der zwischen die beiden Schenkel der U-förmigen Profilleiste eingreift, was eine einfache Montage begünstigt. Die einander gegenüberliegenden Raststufen und Rastleisten führen in vorteilhafter Weise zu einander gegenüberliegenden Rastverbindungen, wodurch auch bei ungünstigen Verhältnissen, wie sie beim Anbringen des Balgs an den Halterahmen vorliegen können, eine zuverlässige Halterung gewährleistet und eine ungewollte Lösung der u-förmigen Profilleiste vom jeweils zugeordneten Halterahmen zuverlässig ausgeschlossen ist. Ein weiterer Vorteil ist darin zu sehen, dass die am Balg anbringbare Profilleiste aus einem vom Balg verschiedenen Material hergestellt werden kann. Es ist daher eine vom Balgmaterial unabhängige, optimale Materialwahl möglich. Ein weiterer, ganz besonderer Vorteil der erfindungsgemäßen Maßnahmen ist auch darin zu sehen, dass infolge der Verwendung der u-förmigen Profilleiste eine radiale Umlenkung des Balgs nicht erforderlich ist. Infolge dessen ergeben sich in den Eckbereichen auch keine durch aneinander anliegende Wandbereiche gebildete geschlossene Falten, was eine zuverlässige Reinigung des Balgs begünstigt. Ferner wird die mit den Endbereichen des Balgs jeweils verbundene Profilleiste mit den Endbereichen des Balgs jeweils verbundene Profilleiste beim Anbau an einen Anbauflansch eines zugeordneten Elements zwischen diesem und der halterahmenseitigen Randleiste eingespannt, wodurch die rahmenseitige Halterung der Endbereiche des Balgs entlastet wird. Außerdem übernimmt die u-förmige Profilleiste eine Dichtfunktion.

Vorteilhafte Ausgestaltungen und zweckmäßige Fortbildungen der übergeordneten Maßnahmen sind in den Unteransprüchen angegeben.

In einer vorteilhaften Ausgestaltung der Erfindung kann vorgesehen sein, dass der Abstand zwischen den beiden Schenkeln der im Querschnitt u-förmigen Profilleiste zumindest der Dicke der Randleiste entspricht. Dadurch kann die Profilleiste sicher und ohne allzu großen Druck an der Randleiste eingehängt werden, wobei diese in die Ausnehmung zwischen den beiden Schenkeln der u-förmigen Profilleiste sauber eingreifen kann.

Besonders vorteilhaft kann sein, wenn die im Querschnitt u-förmige Profilleiste aus gummielastischem Material besteht. Dadurch kann eine höhere Dichtwirkung erzielt werden, da sich die Profilleiste an die der Profilleiste zugewandte Oberfläche des Anbauflansches gleichmäßig anlegen und sogleich auch Unebenheiten ausgleichen kann.

Um Verwirbelungen im Kanalinneren im Bereich der Verbindung des Balgs mit der u-förmigen Profilleiste zu verhindern, kann vorteilhaft vorgesehen sein, dass der Balg eine mit den Profilleisten verbundene Kanalhaut aufweist, die mit ihren Endbereichen jeweils in eine ihrer Dicke entsprechende, im Bereich der der Kanalinnenseite zugewandten Seite der Profilleisten vorgesehene Stufe eingreift. Auf diese Weise wird im Kanalinneren ein ebenmäßiger Übergang von Kanalhaut zu u-förmiger Profilleiste geschaffen.

Hinsichtlich einer schnellen und einfachen Befestigung kann vorgesehen sein, dass die lichte Weite des Schlitzes zumindest der Dicke des zugeordneten Schenkels der Profilleiste entspricht. Dadurch kann der in den Schlitz einführbare Schenkel der Profilleiste in den Schlitz zwischen der Randleiste und dem dieser gegenüberliegenden Steg des Halterahmens leicht eingeschoben werden.

In einer weiteren vorteilhaften Ausgestaltung der Erfindung kann vorgesehen sein, dass der der Randleiste gegenüberliegende Steg mit einer angeformten Tasche versehen und über eine diese begrenzende Biegung mit einer Seitenwand des zugeordneten Einsteckkanals verbunden ist, die über wenigstens eine weitere Biegung mit einer weiteren Seitenwand des Einsteckkanals verbunden ist, die mit einer Randabwinklung passend in die stegseitige Tasche eingreift. Auf diese Weise wird ein im Querschnitt geschlossener Kasten gebildet, der als Einsteckkanal für Eckverbindungswinkel fungiert, so dass Schenkel eines Eckverbindungswinkels in zugeordnete Einsteckkanäle von Profilschienen einsteckbar sind, um diese miteinander zu verbinden und so einen Halterahmen auszubilden.

In einer alternativen Ausführung des Halterahmens kann vorgesehen sein, dass der der Randleiste gegenüberliegende Steg als Randabwinklung der vom anderen Halterahmen abgewandten Seitenwand des Einsteckkanals ausgebildet ist, die über wenigstens eine Biegung mit der parallelen Seitenwand verbunden ist, die über wenigstens eine Biegung mit der frei endenden Randleiste zusammenhängt. Bei dieser Ausführungsform ist die Randleiste als Federschenkel ausgebildet, der bei Verbinden des Halterahmens mit einem Anbauflansch des Kanalgehäuses bzw. einer lufttechnischen Einrichtung in der Ausnehmung zwischen den beiden Schenkeln der u-förmigen Profilleiste in fester Anlage mit der inneren Fläche des Umlenkbereichs der Profilleiste kommt. Dadurch wird die Dichtwirkung wesentlich erhöht.

Weitere vorteilhafte Ausgestaltungen der Erfindung ergeben sich aus den übrigen Unteransprüchen.

Nachstehend wird die Erfindung anhand von Ausführungsbeispielen unter Bezugnahme auf die Zeichnung näher erläutert.

Es zeigen:
- Figur 1: einen Gasströmungskanal mit einem erfindungsgemäßen flexiblen Teilstück im Schnitt;
- Figur 2: einen Ausschnitt aus Figur 1 in vergrößerter Darstellung, der einen Halterahmen in Verbindung mit einer im Querschnitt u-förmigen Profilleiste zeigt;
- Figur 3: einen Halterahmen in Verbindung mit einer im Querschnitt u-förmigen Profilleiste im Schnitt gemäß einer weiteren Ausführungsform der Erfindung;
- Figur 4: die Verbindung gemäß Figur 3 nach Anbringung an einen Anbauflansch eines zugeordneten Elements des Gasströmungskanals; und
- Figur 5: einen Eckbereich eines Halterahmens des flexiblen Teilstücks gemäß Figur 1 ohne aufgenommenen Balg.

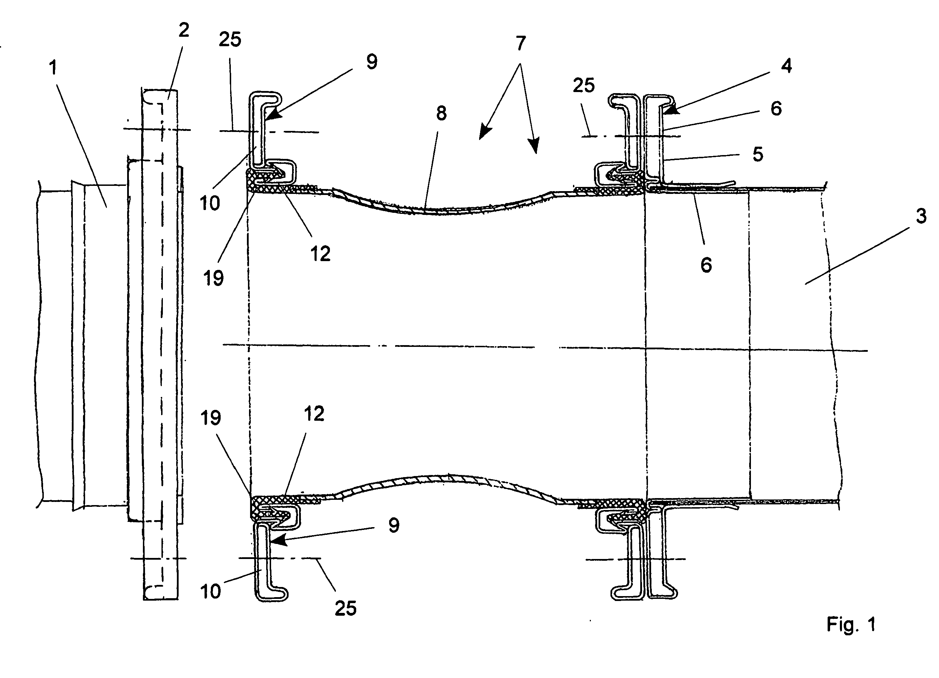

Die Figur 1 zeigt einen Ausschnitt einer lufttechnischen Einrichtung 1, die mit einem Anbauflansch 2 versehen ist. Dieser Einrichtung 1 ist ein Kanalgehäuse 3 mit einem diesen zugeordneten Anbauflansch 4 nachgeordnet. Dieses Kanalgehäuse 3 ist im Querschnitt im wesentlichen rechteckig ausgebildet und wird vorzugsweise als Blechgehäuse hergestellt. An seinen Enden weist das Kanalgehäuse 3 einen umlaufenden, rechteckförmigen Rahmen 5 auf, dessen Rahmenschenkel als Abschnitte eines zweischenkligen Winkelprofils ausgebildet sind, dessen in Kanalachsrichtung verlaufender Schenkel 6 einen Schlitz zum Einführen des zugeordneten Endes des Kanalgehäuses 3 bildet. Der vom dem Kanalinneren zugewandten Schenkel 6 des Rahmens 5 abstehende, rechtwinklig dazu verlaufende Schenkel bildet dabei den Anbauflansch 4.

Wie weiterhin ersichtlich, ist zwischen dem Kanalgehäuse 3 und der lufttechnischen Einrichtung 1 ein flexibles Kanalteilstück 7 vorgesehen, durch das beispielsweise ein Achsversatz oder ähnliches ausgeglichen werden kann. Das flexible Teilstück 7 weist einen zumindest teilweise aus flexiblem Material, z.B. aus einer flexiblen Kunststoffhaut, bestehenden, schlauchförmigen Balg 8 auf, der mit seinen voneinander abgewandten Endbereichen jeweils einen zugeordneten umlaufenden Halterahmen 9 durchgreift und an diesen festlegbar ist. Wie in Figur 1 erkennbar, entspricht der Querschnitt des Balgs 8 nahezu dem Querschnitt des Kanalgehäuses 3, d.h. der Balg 8 ist ebenfalls annähernd rechteckförmig ausgebildet. Dementsprechend sind die Halterahmen 9 ebenso rechteckförmig ausgeführt, um das Aufnehmen des Balgs 8 zu erleichtern. Selbstverständlich sind auch andere Formen, z.B. rund, für das Kanalgehäuse 3 denkbar, wobei dann der Balg 8 wie auch die Halterahmen 9 ebenfalls rund ausgebildet sein sollten. Die Halterahmen 9 bilden an den Endbereichen des flexiblen Teilstücks 7 Flanschanordnungen, mit denen das flexible Teilstück 7 an dem Anbauflansch 2 der lufttechnischen Einrichtung 1 und an dem Anbauflansch 4 des Kanalgehäuses 3 festlegbar und über Verbindungsmittel, beispielsweise Schrauben, verbindbar ist. Eine derartige Verbindung erhöht die Dichtwirkung, so dass das im Gasströmungskanal strömende Gas an den Verbindungsstellen nicht austreten kann.

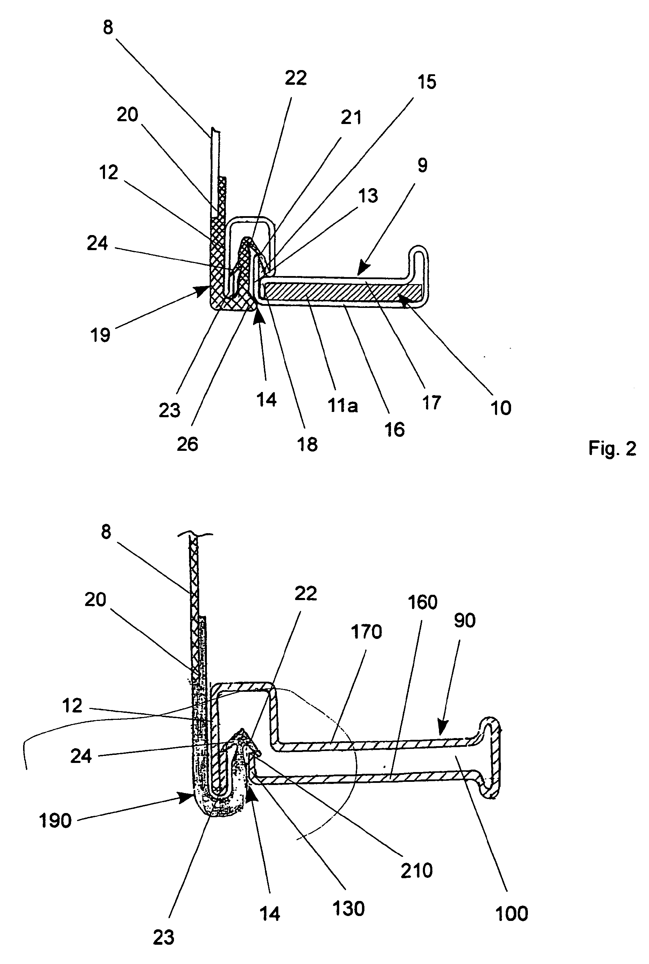

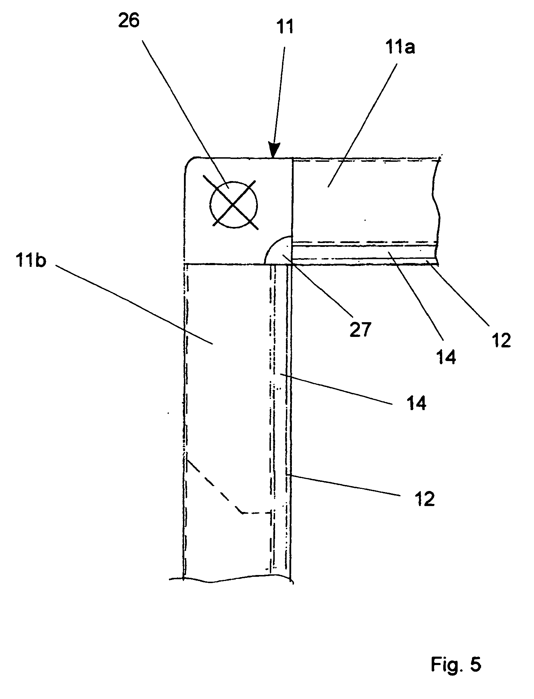

Die Halterahmen 9 werden aus Abschnitten von längeren Profilschienen zusammengesetzt, die im Bereich der Halterahmenecken durch Eckverbindungswinkel 11 miteinander verbunden sind. Schenkel 11a und 11b der Eckverbindungswinkel 11 sind jeweils in einem zugeordneten Einsteckkanal 10 einer Profilschiene einsteckbar, wie in Figur 2 und 5 dargestellt. Die Profilschienen sind aus Blechstreifen hergestellt und können entsprechend rollverformt sein. In Figur 1 ist dabei eine erste Ausführung des Halterahmens 9 dargestellt, wobei

Figur 2 eine vergrößerte Ansicht davon zeigt. In dieser Ausführung des Halterahmens 9 ergibt sich ein im Querschnitt geschlossener Kasten, der als über die gesamte Profillänge sich erstreckender Einsteckkanal 10 für den Eckverbindungswinkel 11 fungiert und dadurch gleichzeitig die Stabilität des Halterahmens 9 erhöht.

Der Halterahmen 9 weist im Bereich seines radial inneren Umfangs eine als einseitig frei endende Randleiste 12 ausgebildete Begrenzungswand auf. Die frei endende Randleiste 12 begrenzt dabei zusammen mit einem gegenüberliegenden, mit der Randleiste 12 über wenigstens eine Biegung zusammenhängenden Steg 13 einen zu der vom jeweils anderen Halterahmen 9 abgewandten Seite hin offenen Schlitz 14. Der der Randleiste 12 gegenüberliegende Steg 13 ist zudem mit einer angeformten Tasche 15 versehen und über eine diese begrenzende Biegung mit einer Seitenwand 16 des zugeordneten Einsteckkanals 10 verbunden. Die Seitenwand 16 ist wiederum über wenigstens eine weitere Biegung mit einer gegenüberliegenden Seitenwand 17 des Einsteckkanals 10 verbunden, die mit einer Randabwinklung 18 passend in die stegseitige Tasche 15 eingreift, wodurch sich der im Querschnitt geschlossene Kasten und somit der Einsteckkanal 10 ergibt.

Der Balg 8 weist eine flexible Kanalhaut auf, die mit ihren Endbereichen jeweils mit einer im Querschnitt u-förmigen Profilleiste 19 zum Anschluss an die Halterahmen 9 verbunden ist. Um eine Gasverwirbelung im Gasströmungskanal im Verbindungsbereich zu verhindern, greift die Kanalhaut mit ihren Endbereichen jeweils in eine ihrer Dicke entsprechende, im Bereich der der Kanalinnenseite zugewandten Seite der u-förmigen Profilleisten 19 vorgesehene Stufe 20 ein. Die Kanalhaut kann mit den u-förmigen Profilleisten 19 im Bereich der Stufen 20 verklebt oder verschweißt werden, wobei sie durch das Vorsehen der Stufen 20 ebenmäßig mit den Profilleisten 19 abschließt.

Die im Querschnitt u-förmige Profilleiste 19 kann aus gummielastischem Material bestehen, um durch die Elastizität ein Verbinden mit dem Halterahmen 9 zu erleichtern und weist, wie genauer in Figur 3 erkennbar, eine im Umlenkbereich im Querschnitt runde Ausführung auf, wobei die äußere Fläche und die innere Fläche der Profilleiste 19 geometrisch ähnlich sind. Der von der Kanalinnenseite abgewandte Schenkel der u-förmigen Profilleiste 19 wird beim Verbinden mit dem Halterahmen 9 in den Schlitz 14 des Halterahmens 9 eingeführt. Dementsprechend ist der dem Schlitz 14 zugeordnete Schenkel der Profilleiste 19 an der freien Randkante der Randleiste 12 einhängbar. Um dies zu ermöglichen, sollte der Abstand zwischen den beiden Schenkeln der Profilleiste 19 zumindest der Dicke der Randleiste 12 des Halterahmens 9 entsprechen, damit diese zwischen die beiden Schenkel eingreifen kann, und die lichte Weite des Schlitzes 14 zumindest der Dicke des zugeordneten bzw. in den Schlitz 14 einführbaren Schenkels der Profilleiste 19, um ein Einführen des Schenkels überhaupt zuzulassen.

Der Schlitz 14 ist für eine sichere Verbindung zwischen Profilleiste 19 und Halterahmen 9 wenigstens einseitig, hier zweiseitig, nach innen stufenförmig erweitert, wie in den Figuren 2 und 3 erkennbar. So ergibt sich eine Raststufe 21. Der in den Schlitz 14 einführbare Schenkel der u-förmigen Profilleiste 19 weist wenigstens eine Rastleiste 22 auf, die dann an der Raststufe 21 einrastbar ist, so dass ein Lösen der Verbindung Profilleiste - Halterahmen erschwert wird.

Ferner ist die frei endende Randleiste 12 des Halterahmens 9 im Bereich ihrer als Randfalz ausgebildeten Randkante mit einer eine Raststufe bildenden Verdickung 23 versehen, an der eine weitere, der Rastleiste 22 gegenüberliegende Rastleiste 24 des in den Schlitz 14 einführbaren Schenkels der Profilleiste 19 einrastbar ist. Wie ersichtlich sind die Rastleisten 22 und 24 axial gegeneinander versetzt am Schenkel vorgesehen und als entgegen der Einführrichtung des zugeordneten Schenkels der Profilleiste 19 in den Schlitz 14 schräg ausgestellte Lippen ausgebildet.

Die freie Randkante der Randleiste 12 des Halterahmens 9 ist ferner gegenüber der vom anderen gegenüberliegenden Halterahmen 9 abgewandten Seitenwand 16 des Einsteckkanals 10 höchstens um weniger als die Wanddicke der an der Randleiste 12 einhängbaren Profilleiste 19 zurückgesetzt. Das bedeutet, sie kann von der Seitenwand 16 nach vorn gemäß Figur 3 vorstehen, in Höhe der Seitenwand 16 vorgesehen sein oder wie in Figur 2 um weniger als die Wanddicke der an der Randleiste 12 einhängbaren Profilleiste 19 zurückgesetzt sein. Die Halterahmen 9 werden durch in Figur 1 angedeutete Verbindungsmittel in Form von Schrauben 25 mit dem jeweils zugeordneten Anbauflansch 2 bzw. 4 verschraubt, wobei die Profilleisten 19 ein elastisches Gegenlager bilden. Die Schrauben 25 befinden sich dabei im Bereich der Eckverbindungswinkel 11, die mit entsprechenden Durchgangslöchern 26 versehen sind. Dasselbe gilt für die Anbauflansche 2 und 4. Die Schrauben 25 werden dabei soweit angezogen, bis die u-förmige Profilleiste 19 im Umlenkbereich, d.h. im Anlagebereich an den jeweiligen Anbauflansch 2 bzw. 4 an diesem parallel anliegt, wobei die Profilleiste 19 Unebenheiten an der Oberfläche der Anbauflansche 2 bzw. 4 durch ihre Elastizität ausgleichen kann. Der in den Schlitz 14 einführbare Schenkel der Profilleiste 19 ist in Richtung Einsteckkanal 10 im Umlenkbereich dann verdickt ausgeführt, wie in Figur 2 ersichtlich. Diese Verdickung 26 schließt nach dem Einführen des Schenkels in den Schlitz 14 und Festlegen der u-förmigen Profilleiste 19 am jeweiligen Anbauflansch 2 bzw. 4 den Schlitz 14 ab, so dass die Verdickung 26 am Steg 13 anliegt, wodurch die Dichtwirkung der Verbindung Halterahmen - Anbauflansch weiter verbessert wird.

Figur 3 zeigt eine alternative Ausführung eines Halterahmens 90 wie auch einer im Querschnitt u-förmigen Profilleiste 190, wobei gleiche Teile des flexiblen Teilstücks 7 der Figur 2 auch in Figur 3 mit den gleichen Bezugszeichen versehen sind. Die Verbindung des Balgs 8 mit der im Querschnitt u-förmigen Profilleiste 190 geschieht auf dieselbe Weise wie bereits oben zur Figur 2 beschrieben. Deshalb soll hier nicht weiter darauf eingegangen werden. Auch hier weist der Halterahmen 90 im Bereich seines radial inneren Umfangs eine als einseitig frei endende Randleiste 12 ausgebildete Begrenzungswand auf.

In dieser Ausführungsform ist jedoch insgesamt der Halterahmen 90 gegenüber dem Halterahmen 9 der Figur 2 anders geformt. Der der Randleiste 12 gegenüberliegende Steg 130 ist dabei als Randabwinklung der vom anderen gegenüberliegenden Halterahmen 90 abgewandten Seitenwand 160 des Einsteckkanals 100 ausgebildet. Die Seitenwand 160 ist indes über wenigstens eine Biegung mit der parallelen Seitenwand 170 verbunden, die wiederum über wenigstens eine Biegung mit der frei endenden Randleiste 12 zusammenhängt. Durch diese Ausgestaltung kann die Randleiste 12 als Federschenkel wirken, da hier kein geschlossener Kasten gemäß Figur 2 vorliegt. Ferner wird durch diese Ausgestaltung des Halterahmens 90 ebenfalls ein Einsteckkanal 100 gebildet, der zwar nach einer Seite hin teilweise offen ist, in den jedoch auch hier ein Schenkel eines Eckverbindungswinkels 11 zum Verbinden der einzelnen Profilschienen eines Halterahmens 90 einsteckbar ist.

Wie aus Figur 3 weiterhin ersichtlich, bildet hier der frei endende Steg 130 die Raststufe 210, an der der in den Schlitz 13 einführbare Schenkel der u-förmigen Profilleiste 190 mit der Rastleiste 22 einrastbar ist. Die u-förmige Profilleiste 190 weist, wie erkennbar ist, auch hier eine im Umlenkbereich im Querschnitt runde Ausführung auf. Der Endabschnitt des in den Schlitz 14 einzuführenden Schenkels weist hier allerdings zwei Rastleisten 22 und 24 in Form einer Pfeilspitze auf, die auch hier entgegen der Einführrichtung des Schenkels der Profilleiste 190 in den Schlitz 14 als schräg ausgestellte Lippen ausgebildet sind. Die Rastleiste 24 ist dabei an der Verdickung 23 der frei endenden Randleiste 12 einhängbar, wobei diese Raststufe in gleicher Höhe zum Steg 130 abschließt.

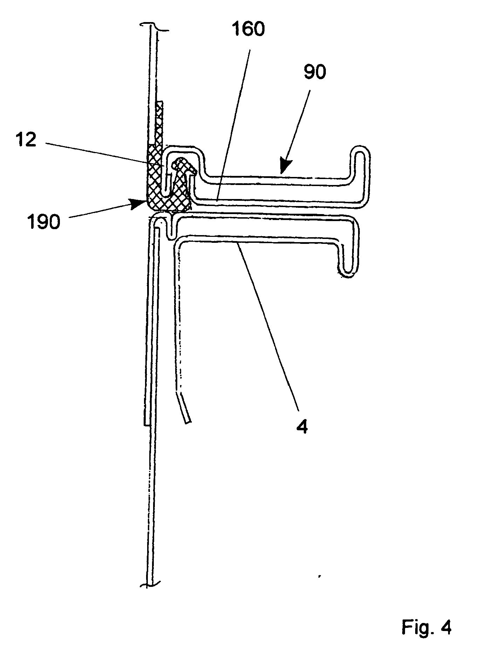

Beim Verbinden des Halterahmens gemäß Figur 4 mit einem Anbauflansch 2 bzw. 4 der lufttechnischen Einrichtung 1 bzw. des Kanalgehäuses 3 mittels Verbindungsmittel, beispielsweise in Form von Schrauben 25, wird die als Federschenkel wirkende Randleiste 12 des Halterahmens 90 zwischen den beiden Schenkeln der Profilleiste 190 an dessen inneren Umlenkbereich angedrückt, so dass auch hier die Dichtwirkung erhöht bzw. verbessert wird, siehe Figur 4. Gleichzeitig wird der äußere Umlenkbereich an den Anbauflansch 2 bzw. 4 gedrückt, so dass dieser eine im Querschnitt nahezu rechteckförmige Form, siehe hierzu Figur 1 und 2 entsprechend, annimmt und somit parallel an der Fläche des Anbauflansches 2 bzw. 4 anliegt. Durch das Zusammenstauchen der elastischen Profilleiste 190 im Umlenkbereich wird das gestauchte Material in den Schlitz 14, in Richtung Steg 130 und in Richtung Seitenwand 160 gedrückt, wodurch eine ebenmäßige Anlage am Anbauflansch 2 bzw. 4 und eine Abdichtung des Schlitzes 14 , insbesondere eine Abdichtung zwischen Halterahmen 90 und Anbauflansch 2 bzw. 4, gewährleistet werden.

Die Figur 5 zeigt einen Eckverbindungswinkel 11, der bereits mit seinen Schenkeln 11a und 11 b in Einsteckkanäle 10 zweier Profilschienen eingesteckt ist und diese somit miteinander verbindet. Der rechteckförmig ausgebildete Halterahmen 9, 90 weist somit vier derartige in Figur 5 dargestellte Eckverbindungswinkel 11 auf. Jeder Eckverbindungswinkel 11 weist eine durchgehende, vorzugsweise viertelrund ausgebildete Ausnehmung 27 auf, die in einem, dem Kanalinneren zugewandten Eckbereich vorgesehen ist, d.h. der Eckverbindungswinkel 11 ist im inneren Eckbereich viertelrund ausgeschnitten. Die Schlitze 14 zur Aufnahme des radial äußeren Schenkels der Profilleiste 19, 190 grenzen dabei an die Ausnehmung 27 an. Die Halterahmen 9, 90 werden beim Verbinden mit dem Balg 8 von der Profilleiste 19, 190 durchgriffen, deren radial äußerer Schenkel dann in die Schlitze 14 eingreift. Im Bereich der Eckverbindungswinkel 11 greift der radial äußere Schenkel jeweils in die Ausnehmungen 27 ein und kann sich dort ohne Entstehung von Falten der viertelrunden Fläche der Ausnehmung 27 angleichen. Auf diese Weise wird eine Faltenbildung im Eckbereich der Halterahmen 9, 90 vermieden, so dass eine Reinigung des Balgs 8 wie auch der Profilleiste 9, 90 mit einfachen Mitteln vorgenommen werden kann.

## Patentansprüche

1. Flexibles Teilstück für einen Gasströmungskanal mit einem zumindest teilweise aus flexiblem Material bestehenden, schlauchförmigen Balg (8), der mit seinen voneinander abgewandten Endbereichen jeweils einen zugeordneten umlaufenden Halterahmen (9,90) durchgreift und hieran festgelegt ist, wobei die Halterahmen (9,90) im Bereich ihres radial inneren Umfangs jeweils eine als einseitig frei endende Randleiste (12) ausgebildete Begrenzungswand aufweisen, die zusammen mit einem gegenüberliegenden Steg (13,130) einen zu der vom jeweils anderen Halterahmen (9,90) abgewandten Seite hin offenen Schlitz (14) begrenzt, in dem der Balg (8) mit einer zugeordneten Profilleiste (19) festgelegt ist, **dadurch gekennzeichnet, dass** die Profilleiste (19) als den zugeordneten Endbereich des Balgs (8) bildende, an ihm angebrachte, im Querschnitt u-förmige Leiste (19,190) ausgebildet ist, die an der frei endenden Randleiste (12) eingehängt ist, wobei ihr von der Kanalinnenseite abgewandter Schenkel in den Schlitz (14) eingeführt ist, der beidseitig nach innen stufenförmige Erweiterungen aufweist, die zwei Raststufen (21,23,210) bilden, und dass der dem Schlitz (14) zugeordnete Schenkel der am Balg angebrachten Profilleiste (19,190) zwei voneinander abgewandte Rastleisten (22,24) aufweist, denen jeweils eine Raststufe (21,210,23) zugeordnet ist.

2. Flexibles Teilstück nach Anspruch 1, **dadurch gekennzeichnet, dass** der Abstand zwischen den beiden Schenkeln der im Querschnitt u-förmigen Profilleiste (19,190) zumindest der Dicke der Randleiste (12) entspricht.

3. Flexibles Teilstück nach Anspruch 1 oder 2, **dadurch gekennzeichnet, dass** die im Querschnitt u-förmige Profilleiste (19, 190) aus gummielastischem Material besteht.

4. Flexibles Teilstück nach Anspruch 1, **dadurch gekennzeichnet, dass** der Balg (8) eine mit den Profilleisten (19) verbundene Kanalhaut aufweist, die mit ihren Endbereichen jeweils in eine ihrer Dicke entsprechende, im Bereich der der Kanalinnenseite zugewandten Seite der Profilleisten (19,190) vorgesehene Stufe (20) eingreift.

5. Flexibles Teilstück nach Anspruch 4, **dadurch gekennzeichnet, dass** die Kanalhaut mit den Profilleisten (19, 190) im Bereich der Stufe (20) verklebt oder verschweißt ist.

6. Flexibles Teilstück nach einem der vorhergehenden Ansprüche, **dadurch gekennzeichnet, dass** die lichte Weite des Schlitzes (14) zumindest der Dicke des zugeordneten Schenkels der Profilleiste (19, 190) entspricht.

7. Flexibles Teilstück nach einem der vorhergehenden Ansprüche, **dadurch gekennzeichnet, dass** die frei endende Randleiste (12) im Bereich ihrer Randkante mit einer eine Raststufe bildenden Verdickung (23) versehen ist.

8. Flexibles Teilstück nach einem der vorhergehenden Ansprüche, **dadurch gekennzeichnet, dass** die Randkante der Randleiste (12) als Randfalz ausgebildet ist.

9. Flexibles Teilstück nach einem der vorhergehenden Ansprüche, **dadurch gekennzeichnet, dass** die Rastleisten (22, 24) als entgegen der Einführrichtung des zugeordneten Schenkels der Profilleiste (19, 190) in den Schlitz (14) schräg ausgestellte Lippen ausgebildet sind.

10. Flexibles Teilstück nach einem der vorhergehenden Ansprüche, **dadurch gekennzeichnet, dass** die Halterahmen (9,90) durch ihren Schenkeln zugeordnete Profilabschnitte gebildet werden, die durch mit in einen jeweils zugeordneten profilseitigen Einsteckkanal (10,100) einsteckbaren Schenkeln (11a, 11b) versehene Eckverbindungswinkel (11) miteinander verbunden sind, wobei die Profilabschnitte als rollverfornte Biegeformlinge ausgebildet sind, deren frei endende Randleiste (12) über wenigstens eine Biegung mit dem gegenüberliegenden Steg (13,130) zusammenhängt.

11. Flexibles Teilstück nach Anspruch 10, **dadurch gekennzeichnet, dass** die Eckverbindungswinkel (11) jeweils eine durchgehende, vorzugsweise viertelrund ausgebildete Ausnehmung (27) aufweisen, die in einem, dem Kanalinneren zugewandten Eckbereich vorgesehen ist.

12. Flexibles Teilstück nach einem der vorhergehenden Ansprüche, **dadurch gekennzeichnet, dass** der der Randleiste (12) gegenüberliegende Steg (13) mit einer angeformten Tasche (15) versehen und über eine diese begrenzende Biegung mit einer Seitenwand (16) des zugeordneten Einsteckkanals (10) verbunden ist, die über wenigstens eine weitere Biegung mit einer weiteren Seitenwand (17) des Einsteckkanals (10) verbunden ist, die mit einer Randabwinklung (18) passend in die stegseitige Tasche (15) eingreift.

13. Flexibles Teilstück nach einem der Ansprüche 1 bis 11, **dadurch gekennzeichnet, dass** der der Randleiste (12) gegenüberliegende Steg (130) als Randabwinklung der vom anderen Halterahmen (90) abgewandten Seitenwand (160) des Einsteckkanals (100) ausgebildet ist, die über wenigstens eine Biegung mit der parallelen Seitenwand (170) verbunden ist, die über wenigstens eine Biegung mit der frei endenden Randleiste (12) zusammenhängt.

14. Flexibles Teilstück nach einem der vorhergehenden Ansprüche, **dadurch gekennzeichnet, dass** die freie Randkante der Randleiste (12) gegenüber der vom anderen Halterahmen (9) abgewandten Seitenwand (16) des Einsteckkanals (10) höchstens um weniger als die Wanddicke der an der Randleiste (12) einhängbaren Profilleiste (19) zurückgesetzt ist.

## Claims

1. A flexible section for a gas flow channel, comprising a tubular bellows (8) which consists at least in part of a flexible material and which penetrates one associated circumferential holding frame (9, 90) each with its end regions facing away from one another and is fixed thereto, with the holding frames (9, 90), in the region of their radially inner circumference, comprising a boundary wall which is respectively arranged as a boundary strip (12) freely ending on one side and which delimits a slit (14) together with an opposite web (13, 130), which slit is open towards the side facing away from the respective other holding frame (9, 90) and in which the bellows (8) is fixed with an associated profile strip (19), **characterized in that** the profile strip (19) is arranged as a strip (19, 190) which forms the associated end region of the bellows (8), is attached thereto, is U-shaped in its cross section, and is suspended in the freely ending boundary strip (12), with its limb facing away from the interior side of the channel being inserted into the slit (14), which comprises inwardly stepped extensions on both sides which form two latching steps (21, 23, 210), and that the limb of the profile strip (19, 190) attached to the bellows, which limb is associated with the slit (14), comprises two latching strips (22, 24) which face away from one another and to which one respective latching step (21, 210, 23) is associated.

2. A flexible section according to claim 1, **characterized in that** the distance between the two limbs of the profile strip (19, 190) which is U-shaped in its cross section corresponds at least to the thickness of the boundary strip (12).

3. A flexible section according to claim 1 or 2, **characterized in that** the profile strip (19, 190) which is U-shaped in its cross section consists of rubber-elastic material.

4. A flexible section according to claim 1, **characterized in that** the bellows (8) comprises a channel skin which is connected with the profile strips (19) and which engages with its end regions into a respective step (20) which corresponds to its thickness and is provided in the region of the side of the profile strips (19, 190) which face the inside of the channel.

5. A flexible section according to claim 1, **characterized in that** the channel skin is glued or welded together with the profile strips (19, 190) in the region of the step (20).

6. A flexible section according to one of the preceding claims, **characterized in that** the clearance of the slit (14) corresponds at least to the thickness of the associated limb of the profile strip (19, 190).

7. A flexible section according to one of the preceding claims, **characterized in that** the freely ending boundary strip (12) is provided in the region of its boundary edge with an enlargement (23) forming a latching step.

8. A flexible section according to one of the preceding claims, **characterized in that** the boundary edge of the boundary strip (12) is arranged as a boundary fold.

9. A flexible section according to one of the preceding claims, **characterized in that** the boundary strips (22, 24) are arranged as lips which are angularly disposed against the direction of insertion of the associated limb of the profile strip (19, 190) into the slit (14).

10. A flexible section according to one of the preceding claims, **characterized in that** the holding frames (9, 90) are formed by profile sections associated with their limbs, which profile sections are connected with one another by corner connection brackets (11) provided with limbs (11 a, 11 b) which are insertable in a respectively associated insertion channel (10, 100) on the profile side, with the profile sections being arranged as roll-formed bending pre-forms, the freely ending boundary strip (12) of which adheres to the opposite web (13, 130) via at least one bend.

11. A flexible section according to claim 10, **characterized in that** the corner connection brackets (11) respectively comprise a continuous recess (27) which is preferably arranged in a quarter round and which is provided in a corner region facing the interior of the channel.

12. A flexible section according to one of the preceding claims, **characterized in that** the web (13) opposite of the boundary strip (12) is provided with a formed pocket (15) and is connected with a side wall (16) of the associated insertion channel (10) via a bend which delimits said pocket, which side wall is connected via at least one further bend with a further side wall (17) of the insertion channel (10) which engages with a bent-off boundary section (18) in a fitting manner into the pocket (15) on the web side.

13. A flexible section according to one of the claims 1 to 11, **characterized in that** the web (130) which is opposite of the boundary strip (12) is arranged as a bent-off boundary section of the side wall (160) of the insertion channel (100) which faces away from the other holding frame (90) and which is connected via at least one bend with the parallel side wall (170) which adheres via at least one bend with the freely ending boundary strip (12).

14. A flexible section according to one of the preceding claims, **characterized in that** the free boundary end of the boundary strip (12) is set back in relation to the side wall (16) of the insertion channel (10) facing away from the other holding frame (9) by not more than less than the wall thickness of the profile strip (19) which can be suspended in the boundary strip (12).

## Revendications

1. Tronçon flexible pour un canal d'écoulement de gaz ayant un soufflet (8) en forme de tuyau flexible qui est réalisé, au moins en partie, dans une matière flexible et qui traverse, par ses zones d'extrémité montrant dans des directions opposées l'une à l'autre, respectivement un cadre de maintien (9, 90) circonférentiel associé et est fixé sur celui-ci, lesdits cadres de maintien (9, 90) présentant chacun, au niveau de leur circonférence radialement intérieur, une paroi de délimitation qui est réalisée en tant que rebord (12) se terminant librement d'un seul côté et qui délimite, conjointement avec une entretoise (13, 130) située en regard, une fente (14) laquelle est ouverte vers le côté tourné en direction opposée à respectivement l'autre cadre de maintien (9, 90) et dans laquelle ledit soufflet (8) est fixé avec une baguette profilée (19) associée, **caractérisé par le fait que** ladite baguette profilée (19) est réalisée en tant que baguette (19, 190) qui forme la zone d'extrémité associée du soufflet (8), est montée sur celui-ci et présente une forme d'U en coupe transversale et qui est accrochée sur ledit rebord (12) se terminant librement, sa branche tournée en direction opposée à la face intérieure du canal étant introduite dans ladite fente (14) qui présente de part et d'autre, vers l'intérieur, des élargissements en gradins lesquels forment deux gradins d'arrêt (21, 23, 210), et que la branche de la baguette profilée (19, 190) montée sur le soufflet, qui est associée à la fente (14) présente deux listels d'arrêt (22, 24) qui sont tournés en direction opposée l'un à l'autre et à chacun d'eux est associé un gradin d'arrêt (21, 210, 23).

2. Tronçon flexible selon la revendication 1, **caractérisé par le fait que** la distance séparant les deux branches de ladite baguette profilée (19, 190) présentant une forme d'U en coupe transversale correspond au moins à l'épaisseur du rebord (12).

3. Tronçon flexible selon la revendication 1 ou 2, **caractérisé par le fait que** ladite baguette profilée (19, 190) présentant une forme d'U en coupe transversale est réalisée dans une matière élastique comme du caoutchouc.

4. Tronçon flexible selon la revendication 1, **caractérisé par le fait que** ledit soufflet (8) présente une peau de canal qui est reliée aux baguettes profilées (19) et qui s'engage, par ses zones d'extrémité, respectivement dans un gradin (20) correspondant à son épaisseur et prévu au niveau du côté des baguettes profilées (19, 190) qui est tourné vers la face intérieure du canal.

5. Tronçon flexible selon la revendication 4, **caractérisé par le fait que** ladite peau de canal est collée ou soudée avec les baguettes profilées (19, 190) au niveau du gradin (20).

6. Tronçon flexible selon l'une quelconque des revendications précédentes, **caractérisé par le fait que** la largeur utile de ladite fente (14) correspond au moins à l'épaisseur de la branche associée de la baguette profilée (19, 190).

7. Tronçon flexible selon l'une quelconque des revendications précédentes, **caractérisé par le fait que** ledit rebord (12) se terminant librement est pourvu, au niveau de son arête de bord, d'un épaississement (23) formant un gradin d'arrêt.

8. Tronçon flexible selon l'une quelconque des revendications précédentes, **caractérisé par le fait que** l'arête de bord du rebord (12) est réalisée en tant que pli de bord.

9. Tronçon flexible selon l'une quelconque des revendications précédentes, **caractérisé par le fait que** les listels d'arrêt (22, 24) sont réalisés en tant que lèvres qui font saillie obliquement à l'encontre de la direction d'introduction de la branche associée de la baguette profilée (19, 190) dans ladite fente (14).

10. Tronçon flexible selon l'une quelconque des revendications précédentes, **caractérisé par le fait que** lesdits cadres de maintien (9, 90) sont formés par des portions profilées associées à leurs branches, qui sont reliées entre elles au moyen d'équerres d'assemblage (11) pourvues de branches (11a, 11b) aptes à être engagées dans un canal d'introduction (10, 100) respectivement associé du profilé, lesdites portions profilées étant réalisées comme pièces formées pliées déformées par roulage dont le rebord (12) se terminant librement est lié par au moins un tournant à l'entretoise (13, 130) située en regard.

11. Tronçon flexible selon la revendication 10, **caractérisé par le fait que** lesdites équerres d'assemblage (11) présentent chacune un évidement (27) traversant de préférence en quart de rond qui est prévu dans une zone de coin tournée vers l'intérieur du canal.

12. Tronçon flexible selon l'une quelconque des revendications précédentes, **caractérisé par le fait que** l'entretoise (13) qui est située en regard du rebord (12) est pourvue d'une poche (15) formée sur elle et est reliée par un tournant délimitant cette dernière à une paroi latérale (16) du canal d'introduction (10) associé, qui est reliée par au moins un autre tournant à une autre paroi latérale (17) du canal d'introduction (10), qui s'engage de manière ajustée par un coude de bord (18) dans ladite poche (15) de l'entretoise.

13. Tronçon flexible selon l'une quelconque des revendications 1 à 11, **caractérisé par le fait que** l'entretoise (130) située en regard du rebord (12) est réalisée en tant que coude de bord de la paroi latérale (160) du canal d'introduction (100), qui est tournée en direction opposée à l'autre cadre de maintien (90) et qui est reliée par au moins un tournant à la paroi latérale parallèle (170) qui est liée par au moins un tournant au rebord (12) se terminant librement.

14. Tronçon flexible selon l'une quelconque des revendications précédentes, **caractérisé par le fait que** l'arête de bord libre du rebord (12) est en retrait par rapport à la paroi latérale (16) du canal d'introduction (10), tournée en direction opposée à l'autre cadre de maintien (9), tout au plus de moins de l'épaisseur de paroi de la baguette profilée (19) apte à être accrochée sur le rebord (12).
